# EUROPEAN PATENT APPLICATION

(11) **EP 4 475 210 A2**
(43) Date of publication of application: **11.12.2024**
(21) Application number: 24180623.1
(22) Date of filing: 06.06.2024
(51) Int. Cl.: H01M 4/131, H01M 4/505, H01M 4/525, H01M 4/58

(54) **CATHODE AND SECONDARY BATTERY COMPRISING SAME**

(30) Priority: 07.06.2023 KR 20230072789; 05.06.2024 KR 20240073844
(71) Applicant: SK On Co., Ltd., Seoul 03161 (KR)
(72) Inventor: SEO, Jung Min, 34124 Daejeon (KR); NAM, Yae Seol, 34124 Daejeon (KR); SON, Chang Geun, 34124 Daejeon (KR); CHOI, Seung Ryul, 34124 Daejeon (KR); HAN, Ji Soo, 34124 Daejeon (KR)
(74) Representative: Stolmár & Partner Patentanwälte PartG mbB

(57) **Abstract**

A cathode according to an embodiment of the present disclosure may include a cathode current collector including a first surface and a second surface; a first cathode material formed on the first surface of the cathode current collector; and a second cathode material formed on the second surface of the cathode current collector. Each of the first cathode material and the second cathode material may include a first cathode active material and a second cathode active material. The first cathode active material and the second cathode active material have different operating voltage ranges. The weight ratio of the first cathode active material and the second cathode active material included in the first cathode material and the weight ratio of the first cathode active material and the second cathode active material included in the second cathode material may be different.

## Description

### BACKGROUND OF THE INVENTION

### 1. Field

The present disclosure relates to a cathode and a secondary battery comprising the same.

### 2. Description of the Related Art

With the development of the electric vehicle market, there is a demand for the manufacturing batteries that can drive long distances on a single charge. To increase the driving range of electric vehicles, the energy density of the batteries must be high. Lithium secondary batteries exhibit high energy density and are most appropriately used as batteries for electric vehicles.

Research is underway to develop cathode materials for lithium secondary batteries for electric vehicles to replace the currently used LiCoO₂. When used in high energy density applications, LiCoO₂ is a major cause of cell explosion due to its structural instability. To improve the stability problem of LiCoO₂, the use of lithium-containing manganese oxides such as LiMnO₂ with a layered structure and LiMn₂O₄ with a spinel structure has been considered, and recently, research has been conducted on the use of ternary metal oxides of Ni, Co, and Mn with a layered structure. Ternary metal oxides of Ni, Co, and Mn with a layered structure exhibit high output in a high state of charge (SOC) section, but a problem occurred in which the output rapidly decreases in a low SOC (SOC 30% or less) section.

Accordingly, there is a need for a method to improve the stability of lithium secondary batteries, improve output in low SOC sections, and minimize sudden voltage drops.

### SUMMARY OF THE INVENTION

The present disclosure provides a cathode that minimizes a sudden voltage drop and improves the amount of resistance increase at the point of a voltage drop, and a secondary battery including the same.

Meanwhile, the present disclosure can be widely applied in the field of electric vehicles, battery charging stations, energy storage system (ESS), and green technology such as photovoltaics and wind power generation using batteries. In addition, the present disclosure can be used in eco-friendly mobility, including electric vehicles and hybrid vehicles, to prevent climate change by suppressing air pollution and greenhouse gas emissions.

A cathode according to an embodiment of the present disclosure may include a cathode current collector including a first surface and a second surface; a first cathode material formed on the first surface of the cathode current collector; and a second cathode material formed on the second surface of the cathode current collector. Each of the first cathode material and the second cathode material may include a first cathode active material and a second cathode active material. The first cathode active material and the second cathode active material have different operating voltage ranges. The weight ratio of the first cathode active material and the second cathode active material included in the first cathode material and the weight ratio of the first cathode active material and the second cathode active material included in the second cathode material may be different.

According to an embodiment, the first cathode active material may include a lithium transition metal oxide with a layered structure, and the second cathode active material may include a lithium phosphate compound with an olivine structure.

According to an embodiment, the lithium transition metal oxide with the layered structure may be represented by the following Formula 1:

[Formula 1] Li₁₊ₐNiₓMn_{y}Co_{1-x-y}O₂

In Formula 1, 0≤a<0.5, 0<x<1, and 0<y<0.5.

According to an embodiment, the oxide represented by Formula 1 may be LiNi_{0.8}Co_{0.1}Mn_{0.1}O₂.

According to an embodiment, the lithium phosphate compound with the olivine structure may be represented by the following Formula 2:

[Formula 2] LiMPO₄

In Formula 2, M is one or more elements selected from the group consisting of Fe, Mn, Ni, Co, and V.

According to an embodiment, the compound represented by Formula 2 may be LiFePO₄.

According to an embodiment, the first cathode active material may include a lithium nickel manganese-based oxide with a spinel structure, and the second cathode active material may include a lithium iron phosphate compound with an olivine structure.

According to an embodiment, the lithium nickel manganese-based oxide with the spinel structure may be represented by the following Formula 3:

[Formula 3] LiₓNi_{y}Mn_{2-y}O₄

In Formula 3, 0.95≤x<1.05, and 0.30≤y≤1.00.

According to an embodiment, the oxide represented by Formula 3 may be LiNi_{0.5}Mn_{1.5}O₄.

According to an embodiment, each of the first cathode material and the second cathode material may further include a cathode active material different from the first cathode active material and the second cathode active material.

According to an embodiment, the weight ratio of the first cathode active material and the second cathode active material contained in the first cathode material and the second cathode material may be 9:1 to 1:9.

According to an embodiment, the weight ratio of the first cathode active material and the second cathode active material contained in the first cathode material may be 1:9 to 6:4, and the weight ratio of the first cathode active material and the second cathode active material contained in the second cathode material may be 1:9 to 6:4.

According to an embodiment, each of the first cathode material and the second cathode material may further include a conductive material and a binder.

A secondary battery according an embodiment of the present disclosure may include a cathode, an anode; and a separator interposed between the cathode and the anode.

A cathode according to an embodiment of the present disclosure includes cathode active materials having different operating voltage ranges, resulting in the effect of improving the output of a secondary battery in a low SOC range.

In addition, a cathode according to an embodiment of the present disclosure includes cathode active materials having different operating voltage ranges, and at the same time, the content ratios (e.g., weight ratio, percent by weight) of the cathode active materials on different surfaces of a cathode current collector are different, and as a result, a voltage drop section of a secondary battery is generated in different SOC sections, and the overall voltage profile exhibits an average value of the voltage on different surfaces of the cathode current collector, thereby providing an effect of improving the amount of resistance increase at the time of the voltage drop and improving the performance of a secondary battery.

Meanwhile, the present disclosure can be widely applied in the field of electric vehicles, battery charging stations, energy storage system (ESS), and green technology such as photovoltaics and wind power generation using batteries. In addition, the present disclosure can be used in eco-friendly mobility, including electric vehicles and hybrid vehicles, to prevent climate change by suppressing air pollution and greenhouse gas emissions.

### BRIEF DESCRIPTION OF THE DRAWINGS

FIG. 1 shows a graph illustrating voltage change according to SOC of a secondary battery in Example 1.
FIG. 2 shows a graph illustrating voltage change according to SOC of a secondary battery in Comparative Example 1.
FIG. 3 shows a graph illustrating voltage change according to charging capacity of a secondary battery in Example 1.
FIG. 4 shows a graph illustrating voltage change according to charging capacity of a secondary battery in Comparative Example 1.

### DETAILED DESCRIPTION

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the present specification or application. In addition, the technical principle of the present invention is not construed as being limited to the embodiments described in the present specification or application.

Hereinafter, a cathode and a secondary battery including the same according to an embodiment of the present disclosure will be described.

A cathode according to an embodiment of the present disclosure may include a cathode current collector including a first surface and a second surface; a first cathode material formed on the first surface of the cathode current collector; and a second cathode material formed on the second surface of the cathode current collector. Each of the first cathode material and the second cathode material may include a first cathode active material and a second cathode active material. The first cathode active material and the second cathode active material have different operating voltage ranges. The weight ratio of the first cathode active material and the second cathode active material included in the first cathode material and the weight ratio of the first cathode active material and the second cathode active material included in the second cathode material may be different.

A cathode current collector according to an embodiment of the present disclosure may include a first surface and a second surface. Depending on the embodiment, a first surface and a second surface may be different surfaces of a cathode current collector. For example, a first surface may be one surface (or front surface) of a cathode current collector, and a second surface may be the other surface (or back surface) of the cathode current collector.

A cathode according to an embodiment of the present disclosure may include a first cathode material formed on a first surface of a cathode current collector and a second cathode material formed on a second surface of a cathode current collector. For example, a first cathode material and a second cathode material may each be formed on different surfaces of a cathode current collector.

According to an embodiment, each of a first cathode material and a second cathode material may include the same two or more types of cathode active materials. For example, each of a first cathode material and a second cathode material may include a first cathode active material and a second cathode active material.

According to an embodiment, a first cathode active material and a second cathode active material may have different operating voltage ranges. According to an embodiment, the content ratio (e.g., weight ratio) of a cathode active material and a second cathode active material included in a first cathode material and the content ratio (e.g., weight ratio) of a first cathode active material and a second cathode active material included in a second cathode material may be different.

According to an embodiment, a cathode according to an embodiment of the present disclosure includes a cathode current collector. A cathode current collector may include a known conductive material as long as it does not cause a chemical reaction within a secondary battery. For example, a current collector may include any one of stainless steel, nickel (Ni), aluminum (Al), titanium (Ti), copper (Cu), and alloys thereof, and may be provided in various forms such as film, sheet, and foil.

According to an embodiment, each of a first cathode material and a second cathode material may include a first cathode active material and a second cathode active material having different operating voltage ranges, and thus a high output may be exhibited due to a cathode active material having a high operating voltage range in a relatively high state of charge (SOC) section, and rapid decrease in output caused by the increase in resistance may be compensated for due to a cathode active material having a relatively low operating voltage range in a relatively low SOC section.

According to an embodiment, the weight ratio of a first cathode active material and a second cathode active material included in a first cathode material and the weight ratio of a first cathode active material and a second cathode active material included in a second cathode material may be different. Experimentally, when cathode active materials with different operating voltage ranges are blended, a sudden voltage drop may occur in a transient region due to the operating voltage difference between the two materials and the resistance may be increased, and as a result, there may be a risk that the output of a secondary battery decreases. In this aspect, the present disclosure defines the content ratio (e.g., weight ratio) of a first cathode active material and a second cathode material on each of a first surface and a second surface of a cathode current collector to be different. A voltage drop section may be generated in different SOC sections, and the overall voltage profile exhibits an average value of the voltage on different surfaces of the cathode current collector, thereby providing an effect of improving the amount of resistance increase at the time of the voltage drop and ultimately improving the performance of a secondary battery.

According to an embodiment, a first cathode active material and a second cathode active material may form different structures. For example, a first cathode active material may include a lithium transition metal oxide with a layered structure, and a second cathode active material may include a lithium phosphate compound with an olivine structure. In a lithium transition metal oxide with a layered structure, constituting elements of a cathode active material are positioned in a layered structure so that lithium ions may be stored between the crystal lattice layers when charging a secondary battery. For example, a lithium transition metal oxide with a layered structure may be a ternary transition metal oxide. However, the present disclosure is not necessarily limited thereto. In another embodiment, a cathode active material may further include an additional active material in addition to the examples described above. For example, a cathode active material may be a transition metal oxide containing four or more types of elements.

Meanwhile, a lithium phosphate compound with an olivine structure may have a hexahedral shape and are characterized by higher structural stability compared to a layered structure. For example, a lithium phosphate compound with an olivine structure may be lithium iron phosphate (LFP).

According to an embodiment, a first cathode active material may include one or more selected from the group consisting of lithium cobalt oxide, lithium nickel oxide, lithium manganese oxide, lithium cobalt-nickel oxide, lithium cobalt-manganese oxide, lithium manganese-nickel oxide, and lithium cobalt-nickel-manganese oxide with a layered structure.

According to an embodiment, a lithium transition metal oxide with a layered structure may be represented by the following Formula 1:

[Formula 1] Li₁₊ₐNiₓMn_{y}Co_{1-x-y}O₂

In Formula 1, 0≤a<0.5, 0<x<1, and 0<y<0.5.

For example, the oxide represented by Formula 1 may be LiNi_{0.8}Co_{0.1}Mn_{0.1}O₂.

According to an embodiment, a second cathode active material may be a lithium oxide with an Fe-based olivine structure in which a part of Fe is substituted with different element(s).

According to an embodiment, a lithium phosphate compound with an olivine structure may be represented by the following Formula 2:

[Formula 2] LiMPO₄

In Formula 2, M may be one or more elements selected from the group consisting of Fe, Mn, Ni, Co, and V.

For example, the compound represented by Formula 2 may be LiFePO₄.

According to an embodiment, a first cathode active material may include a lithium nickel manganese-based oxide with a spinel structure, and a second cathode active material may include a lithium iron phosphate compound with an olivine structure. A lithium nickel manganese-based oxide with a spinel structure has a three-dimensional lattice structure and thus has excellent stability.

According to an embodiment, a lithium nickel manganese-based oxide with a spinel structure may be represented by the following Formula 3:

[Formula 3] LiₓNi_{y}Mn_{2-y}O₄

In Formula 3, 0.95≤x<1.05, and 0.30≤y≤1.00.

For example, the compound represented by Formula 3 may be LiNi_{0.5}Mn_{1.5}O₄.

As described above, as a cathode active material having a low operating voltage range and a cathode active material having a relatively high operating voltage range are blended, and at the same time, different content ratios (e.g., weight ratio) of the cathode active materials having different operating voltage ranges are define on each of the different surfaces (e.g., first surface and second surface) of a cathode current collector, rapid decrease in output caused by the increase in resistance in a low SOC section may be compensated for, and the overall voltage profile exhibits an average value of the voltage on different surfaces of the cathode current collector, thereby providing a technical effect of improving the amount of resistance increase at the time of the voltage drop and ultimately improving the performance of a secondary battery.

According to an embodiment, each of a first cathode material and a second cathode material may further include a cathode active material different from a first cathode active material and a second cathode active material. A cathode active material different from a first cathode active material and a second cathode active material may include at least one selected from the group consisting of a lithium transition metal oxide with a layered structure, a lithium nickel manganese-based oxide with a spinel structure, and a lithium phosphate compound with an olivine structure. By increasing or decreasing the operating voltage range of a secondary battery by the added cathode active material, the final operating voltage range may be adjusted to a desired level.

According to an embodiment, a content ratio (e.g., weight ratio) of a first cathode active material and a second cathode active material included in each of a first cathode material and a second cathode material may satisfy a numerical range, and accordingly, technical effects of improving the stability of secondary batteries and improving the output in a low SOC range may both be achieved.

For example, the content ratio of a first cathode active material and a second cathode active material included in a first cathode material and a second cathode material may be 9:1 to 1:9. Depending on an embodiment, the content ratio may be based on the weight of a first cathode active material and a second cathode active material included in each of a first cathode material and a second cathode material.

According to an embodiment, when the weight ratio of a first cathode active material and a second cathode active material in a first cathode material is 5:5, the weight ratio of the first cathode active material and the second cathode active material in a second cathode material may be in a range from 9:1 to 1:9 excluding 5:5.

According to an embodiment, when the weight ratio of a first cathode active material and a second cathode active material in a first cathode material is 7:3, the weight ratio of the first cathode active material and the second cathode active material in a second cathode material may be in a range from 9:1 to 1:9 excluding 7:3.

According to an embodiment, the weight ratio of a first cathode active material and a second cathode active material included in a first cathode material may be 1:9 to 6:4, and the weight ratio of a first cathode active material and a second cathode active material included in a second cathode material may be 1:9 to 6:4.

According to an embodiment, the weight ratio of a first cathode active material and a second cathode active material included in a first cathode material may be 1:9 to 5:5, and the weight ratio of a first cathode active material and a second cathode active material included in a second cathode material may be 2:8 to 6:4.

According to an embodiment, the weight ratio of a first cathode active material and a second cathode active material included in a first cathode material may be 1:9 to 4:6, and the weight ratio of a first cathode active material and a second cathode active material included in a second cathode material may be 3:7 to 6:4.

According to an embodiment, the weight ratio of a first cathode active material and a second cathode active material included in a first cathode material may be 1:9 to 3:7, and the weight ratio of a first cathode active material and a second cathode active material included in a second cathode material may be 4:6 to 6:4.

According to an embodiment, the weight ratio of a first cathode active material and a second cathode active material included in a first cathode material may be 1:9 to 2:8, and the weight ratio of a first cathode active material and a second cathode active material included in a second cathode material may be 5:5 to 6:4.

According to an embodiment, the weight ratio of a first cathode active material and a second cathode active material included in a first cathode material may be 2:8, and the weight ratio of a first cathode active material and a second cathode active material included in a second cathode material may be 6:4.

According to an embodiment, the content of a first cathode active material in a first cathode material may be 10wt% or more, or 60wt% or less, 50wt% or less, 40wt% or less, 30wt% or less, or 20wt% or less based on the total weight of the first cathode material. The content of a first cathode active material may be included within a range set by appropriately selecting the upper and lower limits described above.

According to an embodiment, the content of a second cathode active material in a first cathode material may be 40wt% or more, 50wt% or more, 60wt% or more, 70wt% or more, or 80wt% or more, or 90wt% or less based on the total weight of the first cathode material. The content of a second cathode active material may be included within a range set by appropriately selecting the upper and lower limits described above.

According to an embodiment, the content of a first cathode active material in a second cathode material may be 10wt% or more, 20wt% or more, 30wt% or more, 40wt% or more, or 50wt% or more, or 60wt% or less based on the total weight of the second cathode material. The content of a first cathode active material may be included within a range set by appropriately selecting the upper and lower limits described above.

According to an embodiment, the content of a second cathode active material in a second cathode material may be 40wt% or more, or 90wt% or less, 80wt% or less, 70wt% or less, 60wt% or less, or 50wt% or less based on the total weight of the second cathode material. The content of a second cathode active material may be included within a range set by appropriately selecting the upper and lower limits described above.

In an embodiment that satisfies the above-described range, high capacity and high energy of a secondary battery may be achieved, as a voltage drop section is generated in different SOC sections, the amount of resistance increase at the time of voltage drop may be improved, ultimately providing an effect of improving the performance of a secondary battery.

According to an embodiment, each of a first cathode material and a second cathode material may further include a conductive material and a binder. A binder may improve mechanical stability by mediating the bond between a cathode current collector and cathode materials. For example, a binder may be an organic binder or an aqueous binder. For example, an organic binder may be any one of poly(vinylidene fluoride-co-hexafluoropropylene (PVDF-co-HFP), polyvinylidene fluoride (PVDF), polyacrylonitrile, and poly(methyl methacrylate), and an aqueous binder may be styrene-butadiene rubber (SBR), but is not limited thereto.

A conductive material may improve the electrical conductivity of a secondary battery. A conductive material may include a metal-based material. A conductive material may include a typical carbon-based conductive material. For example, the conductive material may include any one of graphite, carbon black, graphene, and carbon nanotubes, and may include carbon nanotubes depending on an embodiment.

A secondary battery according to an embodiment of the present disclosure may include a cathode capable of improving the performance of the secondary battery described above, and may further include an anode and a separator disposed between the cathode and the anode.

According to an embodiment, a secondary battery may be manufactured according to a known method. For example, it may be manufactured by placing a porous separator between a cathode and an anode and adding an electrolyte solution.

According to an embodiment, a cathode is the same as described above, and an anode may include an anode current collector and an anode material. An anode current collector may include any one of stainless steel, nickel (Ni), aluminum (Al), titanium (Ti), copper (Cu), and alloys thereof, and may be provided in various forms such as film or sheet. An anode material may include an anode active material. An anode active material may be a material which lithium ions may be inserted to and extracted from. For example, an anode active material may be any one of a carbon-based material such as crystalline carbon, amorphous carbon, carbon composite, and carbon fiber, a lithium alloy, silicon (Si), and tin (Sn). Depending on an embodiment, an anode active material may be natural graphite or artificial graphite, but is not limited thereto. In addition, according to an embodiment, an anode material may further include a binder and a conductive material, and the applicable types of binder and conductive material are the same as those previously described for a cathode material.

According to an embodiment, an electrolyte solution may be a non-aqueous electrolyte solution. An electrolyte solution may include a lithium salt and an organic solvent. For example, an organic solvent may include one or more selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

According to an embodiment, a separator may be disposed between a cathode and an anode. A separator may be formed to prevent electrical short circuit between a cathode and an anode and to generate a flow of ions.

For example, a separator may include a porous polymer film or a porous non-woven fabric. A porous polymer film may be formed to be a single layer or multiple layers including a polyolefin-based polymer such as an ethylene polymer, a propylene polymer, an ethylene/butene copolymer, an ethylene/hexene copolymer, and an ethylene/methacrylate copolymer. A porous nonwoven fabric may include glass fibers with a high melting point and polyethylene terephthalate fibers. However, it is not limited thereto, and depending on an embodiment, it may be a highly heat-resistant separator containing ceramic (ceramic coated separator).

According to an embodiment, a plurality of secondary batteries may be provided and formed within a case by winding, lamination, folding, or zigzag stacking. In addition, a module may include a secondary battery as a unit cell, and a device may include a module as a power source.

Hereinafter, the present disclosure will be further described based on examples and comparative examples. However, the following examples and comparative examples are only examples to explain the embodiments according to the present disclosure in more detail, and the present disclosure is not limited to the examples and comparative examples described below.

### <Manufacturing Examples> - Cathode manufacturing

### Manufacturing Example 1

A first cathode material was prepared by mixing 97% by weight of a mixture of a first cathode active material and a second cathode active material (20% by weight of LiNi_{0.8}Co_{0.1}Mn_{0.1}O₂ and 80% by weight of LiFePO₄, 1% by weight of carbon nanotubes, and 2% by weight of PVDF with N-methyl-2-pyrrolidone. At the same time as manufacturing the first cathode material, a second cathode material was prepared by mixing 97% by weight of a mixture of a first cathode active material and a second cathode active material (60% by weight LiNi_{0.8}Co_{0.1}Mn_{0.1}O₂ and 40% by weight LiFePO₄), 1% by weight carbon nanotubes, and 2% by weight of PVDF with N-methyl-2-pyrrolidone.

The first cathode material and the second cathode material were applied to different surfaces of a 12 µm-thick aluminum current collector and then dried. The completely dried first cathode material and second cathode material were rolled to manufacture a cathode.

### Manufacturing Example 2

A cathode was manufactured by the same process as Manufacturing Example 1 except that 10% by weight of LiNi_{0.8}Co_{0.1}Mn_{0.1}O₂ and 90% by weight of LiFePO₄ were blended as a first cathode material, instead of blending 20% by weight of LiNi_{0.8}Co_{0.1}Mn_{0.1}O₂ and 80% by weight of LiFePO₄ as a first cathode material as in Manufacturing Example 1, and 50% by weight LiNi_{0.8}Co_{0.1}Mn_{0.1}O₂ and 50% by weight LiFePO₄ were blended as a second cathode material, instead of blending 60% by weight LiNi_{0.8}Co_{0.1}Mn_{0.1}O₂ and 40% by weight LiFePO₄ as a second cathode material as in Manufacturing Example 1.

### Manufacturing Example 3

A cathode was manufactured by the same process as Manufacturing Example 1 except that a first cathode material was applied to different surfaces of a 12 µm-thick aluminum current collector and then dried and a second cathode material was not prepared, instead of applying a first cathode material and a second cathode material on different surfaces of a 12 µm-thick aluminum current collector and drying as in Manufacturing Example 1.

### Manufacturing Example 4

A cathode was manufactured by the same process as Manufacturing Example 2 except that a first cathode material was applied to different surfaces of a 12 µm-thick aluminum current collector and then dried and a second cathode material was not prepared, instead of applying a first cathode material and a second cathode material on different surfaces of a 12 µm-thick aluminum current collector and drying as in Manufacturing Example 2.

### <Examples> - Secondary battery manufacturing

### Example 1

### Anode manufacturing

An anode material was prepared by mixing 25% by weight of natural graphite, 70% by weight of artificial graphite, 4% by weight of SBR, and 1% by weight of carbon nanotubes in distilled water. The anode material was applied on an 8 µm-thick copper current collector and then dried. The completely dried anode material was rolled to manufacture an anode.

### Secondary battery manufacturing

A 13 µm-thick polyethylene separator was interposed between the anode manufactured as above and the cathode of Manufacturing Example 1. Afterwards, a secondary battery was manufactured by injecting an electrolyte solution containing 1 M LiPF₆ dissolved in a solvent prepared by mixing 25% by volume of ethylene carbonate and 75% by volume of diethyl carbonate.

### Example 2

A secondary battery was manufactured by the same process as Example 1 except that the cathode of Manufacturing Example 2 was used in Example 1 instead of the cathode of Manufacturing Example 1.

### Comparative Example 1

A secondary battery was manufactured by the same process as Example 1 except that the cathode of Manufacturing Example 3 was used in Example 1 instead of the cathode of Manufacturing Example 1.

### Comparative Example 2

A secondary battery was manufactured by the same process as Example 1 except that the cathode of Manufacturing Example 4 was used in Example 1 instead of the cathode of Manufacturing Example 1.

### <Experimental Examples>

### Experimental Example 1 - Measurement of voltage drop depending on SOC

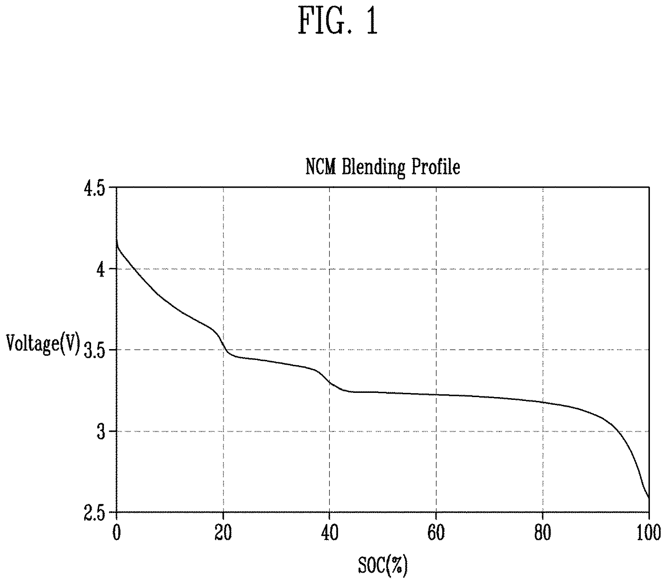

FIG. 1 shows a graph illustrating voltage change according to SOC of a secondary battery in Example 1.

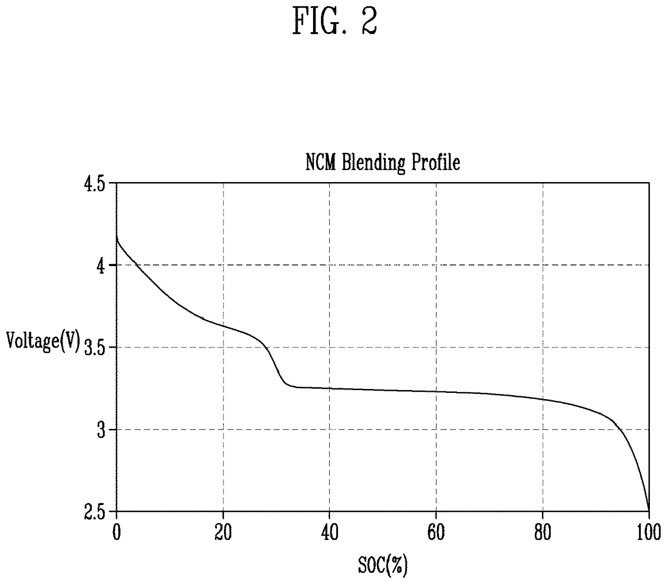

FIG. 2 shows a graph illustrating voltage change according to SOC of a secondary battery in Comparative Example 1.

The voltage drop depending on the SOC of the secondary batteries manufactured in Example 1 and Comparative Example 1 was measured in a voltage range of 4.5 V to 2.5 V based on the cathode potential. FIG. 1 shows the measurement results of Example 1, and FIG. 2 shows the measurement results of Comparative Example 1.

### Experimental Example 2 - Measurement of voltage drop depending on charging capacity

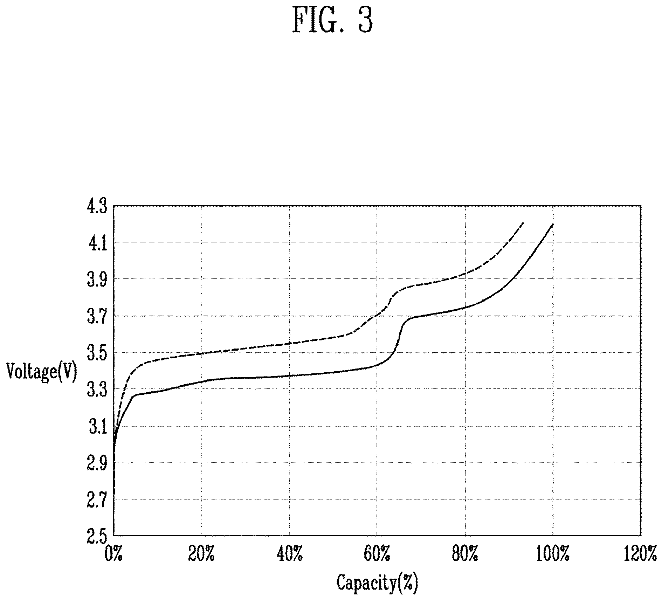

FIG. 3 shows a graph illustrating voltage change according to charging capacity of a secondary battery in Example 1.

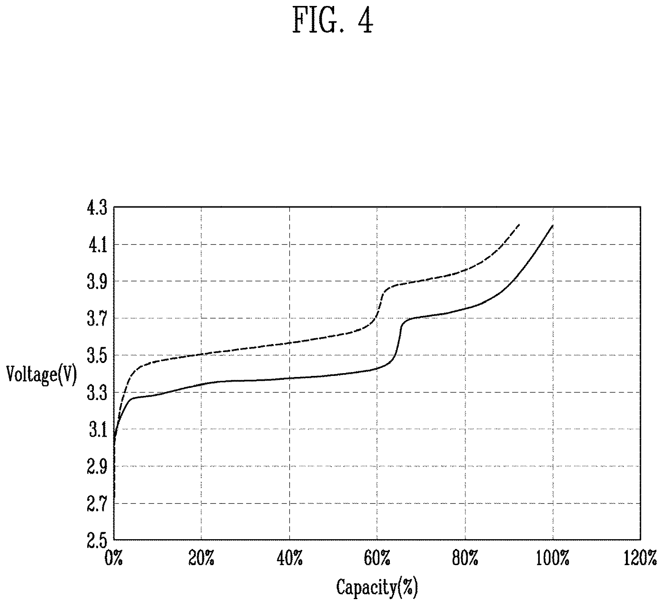

FIG. 4 shows a graph illustrating voltage change according to charging capacity of a secondary battery in Comparative Example 1.

The secondary batteries manufactured in Example 1 and Comparative Example 1 were charged under constant current (CC) conditions in a voltage range of 4.5V to 2.5V based on the cathode potential, and the voltage drop depending on the charging capacity was measured. FIG. 3 shows the measurement results of Example 1, and FIG. 4 shows the measurement results of Comparative Example 1.

In FIGS. 3 and 4, the graph indicated by the dotted line represents the intensity of the voltage drop of the secondary battery when charged under a CC condition of 1/3 C, and the graph indicated by a solid line represents the intensity of the voltage drop of the secondary battery when charged under a CC condition of 2.0 C.

### Review of Experimental Examples

Referring to FIG. 1 to 4, it can be confirmed that in Example 1, the section where a voltage drop occurs is divided into two parts, and the intensity of the voltage drop is halved compared to Comparative Example 1, and the slope at the time of the voltage drop becomes gentle. In other words, even though LiNi_{0.8}Co_{0.1}Mn_{0.1}O₂ and LiFePO₄ are blended as cathode active materials and used as in both Example 1 and Comparative Example 1, by setting the content ratio (e.g., weight ratio) of LiNi_{0.8}Co_{0.1}Mn_{0.1}O₂ and LiFePO₄ to be different on the different surfaces of the cathode current collector as in Example 1, the section where the voltage drop occurs may be divided. Accordingly, the overall voltage profile exhibits an average value of the voltage on different surfaces of the cathode current collector, thereby providing an effect of improving the amount of resistance increase at the time of the voltage drop and ultimately improving the performance of a secondary battery.

On the other hand, it can be confirmed that even in the case where LiNi_{0.8}Co_{0.1}Mn_{0.1}O₂ and LiFePO₄ are blended as cathode active materials and used as in Comparative Example 1, when the content ratio (e.g., weight ratio) of LiNi_{0.8}Co_{0.1}Mn_{0.1}O₂ and LiFePO₄ is the same on both sides of the cathode current collector, a sudden voltage drop occurs in the section of about SOC 30% or the section where the charging capacity is about 60% to about 70%, and the resistance increases, ultimately leading to a problem of deteriorating the performance of the secondary battery.

## Claims

1. A cathode comprising:
a cathode current collector including a first surface and a second surface;
a first cathode material formed on the first surface of the cathode current collector; and
a second cathode material formed on the second surface of the cathode current collector,
wherein each of the first cathode material and the second cathode material includes a first cathode active material and a second cathode active material,
wherein the first cathode active material and the second cathode active material have different operating voltage ranges, and
the weight ratio of the first cathode active material and the second cathode active material included in the first cathode material and the weight ratio of the first cathode active material and the second cathode active material included in the second cathode material are different.

2. The cathode according to claim 1, wherein the first cathode active material includes a lithium transition metal oxide with a layered structure, and the second cathode active material includes a lithium phosphate compound with an olivine structure.

3. The cathode according to claims 1 or 2, wherein the lithium transition metal oxide with the layered structure is represented by the following Formula 1:
[Formula 1] Li₁₊ₐNiₓMn_{y}Co_{1-x-y}O₂
In Formula 1, 0≤a<0.5, 0<x<1, and 0<y<0.5.

4. The cathode according to claim 3, wherein the oxide represented by Formula 1 is LiNi_{0.8}Co_{0.1}Mn_{0.1}O₂.

5. The cathode according to claims 1 or 2, wherein the lithium phosphate compound with the olivine structure is represented by the following Formula 2:
[Formula 2] LiMPO₄
In Formula 2, M is one or more elements selected from the group consisting of Fe, Mn, Ni, Co, and V.

6. The cathode according to claim 5, wherein the compound represented by Formula 2 is LiFePO₄.

7. The cathode according to claim 1, wherein the first cathode active material includes a lithium nickel manganese-based oxide with a spinel structure, and the second cathode active material includes a lithium iron phosphate compound with an olivine structure.

8. The cathode according to claims 1 or 7, wherein the lithium nickel manganese-based oxide with the spinel structure is represented by the following Formula 3:
[Formula 3] LiₓNi_{y}Mn_{2-y}O₄
In Formula 3, 0.95≤x<1.05, and 0.30≤y≤1.00.

9. The cathode according to claim 8, wherein the oxide represented by Formula 3 is LiNi_{0.5}Mn_{1.5}O₄.

10. The cathode according to any one of claims 1 to 9, wherein each of the first cathode material and the second cathode material further includes a cathode active material different from the first cathode active material and the second cathode active material.

11. The cathode according to any one of claims 1 to 10, wherein the weight ratio of the first cathode active material and the second cathode active material contained in the first cathode material and the second cathode material is 9:1 to 1:9.

12. The cathode according to any one of claims 1 to 11, wherein the weight ratio of the first cathode active material and the second cathode active material contained in the first cathode material is 1:9 to 6:4, and the weight ratio of the first cathode active material and the second cathode active material contained in the second cathode material is 1:9 to 6:4.

13. The cathode according to any one of claims 1 to 12, wherein each of the first cathode material and the second cathode material further includes a conductive material and a binder.

14. A secondary battery comprising:
a cathode according to any one of claims 1 to 13;
an anode; and
a separator interposed between the cathode and the anode.
